# EUROPÄISCHE PATENTANMELDUNG

(11) **EP 2 426 163 A1**
(43) Veröffentlichungstag der Anmeldung: **07.03.2012**
(21) Anmeldenummer: 10175594.0
(22) Anmeldetag: 07.09.2010
(51) Int. Cl.: C08J 5/00, C08K 9/04, C08K 3/04

(54) **Verfahren zur Herstellung von Polymer-CNT-Kompositen**

(71) Anmelder: Bayer MaterialScience AG, 51368 Leverkusen (DE)
(72) Erfinder: Die Erfindernennung liegt noch nicht vor

(57) **Zusammenfassung**

Ein Verfahren zur Herstellung von Polymer-Kohlenstoffnanoröhren-(CNT-)Kompositen umfasst die Schritte:
(A) Bereitstellen von Kohlenstoffnanoröhren-Agglomeraten mit einer durchschnittlichen Agglomeratgröße von ≥ 0,02 mm bis ≤ 6 mm;
(B) Kontaktieren der Kohlenstoffnanoröhren-Agglomerate mit einem Tränkungsmaterial, wobei das Kontaktieren derart durchgeführt wird, dass ≥ 50 Gewichts-%, bezogen auf das Gewicht der Kohlenstoffnanoröhren, der Kohlenstoffnanoröhren-Agglomerate nach dem Kontaktieren immer noch eine durchschnittliche Agglomeratgröße von ≥ 0,02 mm aufweisen; und
(C) Einarbeiten der in Schritt (B) erhaltenen, mit einem Tränkungsmaterial kontaktierten Kohlenstoffnanoröhren-Agglomerate in ein thermoplastisches Polymermaterial oder in ein Reaktivharzsystem.

Die Erfindung betrifft weiterhin mit einem Tränkungsmaterial kontaktierte Kohlenstoffnanoröhren-Agglomerate und ein Kohlenstoffnanoröhren umfassendes Polymerkomposit.

## Beschreibung

Die vorliegende Erfindung betrifft ein Verfahren zur Herstellung von Polymer-Kohlenstoffnanoröhren-Kompositen, umfassend die Schritte des Bereitstellens von Kohlenstoffnanoröhren-Agglomeraten mit einer durchschnittlichen Agglomeratgröße von ≥ 0,02 mm bis ≤ 6 mm, des Kontaktierens der Kohlenstoffnanoröhren-Agglomerate mit einem Tränkungsmaterial und des Einarbeitens der mit einem Tränkungsmaterial kontaktierten Kohlenstoffnanoröhren-Agglomerate in ein thermoplastisches Polymermaterial oder ein reaktives Harzsystem.

Die Erfindung betrifft weiterhin mit einem Tränkungsmaterial kontaktierte Kohlenstoffnanoröhren-Agglomerate und ein Kohlenstoffnanoröhren umfassendes Polymerkomposit.

Kohlenstoffnanoröhren (carbon nanotubes, CNTs) sind für ihre außergewöhnlichen Eigenschaften bekannt. So beträgt beispielsweise deren Festigkeit das ungefähr 100-fache des Stahls, deren thermische Leitfähigkeit ist etwa so groß wie die von Diamant, ihre thermische Stabilität reicht bis hoch zu 2800 °C im Vakuum und deren elektrische Leitfähigkeit kann ein Vielfaches der Leitfähigkeit von Kupfer betragen. Diese strukturbedingten Charakteristika sind auf molekularer Ebene allerdings häufig nur dann zugänglich, wenn es gelingt, Kohlenstoffnanoröhren homogen zu verteilen und einen möglichst großen Kontakt zwischen den Röhren und dem Medium herzustellen, also diese mit dem Medium verträglich und somit stabil dispergierbar zu machen. Hinsichtlich elektrischer Leitfähigkeit ist es weiterhin erforderlich, ein Netzwerk an Röhren auszubilden, in dem sich diese im Idealfall nur an den Enden berühren beziehungsweise ausreichend nahe kommen. Hierbei sollten die Kohlenstoffnanoröhren möglichst vereinzelt, das heißt agglomeratfrei, nicht ausgerichtet und in einer Konzentration vorliegen, bei der sich ein solches Netzwerk gerade eben ausbilden kann, was sich durch den sprunghaften Anstieg der elektrischen Leitfähigkeit in Abhängigkeit von der Konzentration an Kohlenstoffnanoröhren widerspiegelt (Perkolationsgrenze). Auch zum Erreichen verbesserter mechanischer Eigenschaften von Kompositen wie z.B. in reaktiven Harzen wie Epoxiden beobachtet, ist eine exzellente Dispergierung und Vereinzelung der Kohlenstoffnanoröhren erforderlich, da größere Agglomerate zu Bruchstellen führen (Zhou, eXPRESS Polym. Lett. 2008, 2, 1, 40-48) und dann eher eine Verschlechterung der mechanischen Eigenschaften solcher Komposite beobachtet wird.

Für technische Anwendungen ist daher die Einarbeitung von solchen Partikeln in Polymermatrice interessant, aber auch eine Herausforderung. Zwei Aspekte müssen für eine erfolgreiche Verarbeitung von Kohlenstoffnanoröhren, wenn man durch ihre Nutzung einen Werkstoff beispielsweise elektrisch leitfähig und/oder mechanisch besser machen möchte, berücksichtigt werden: das vollständige Aufbrechen und Entbündeln von Kohlenstoffnanoröhren-Agglomeraten und ― häufig ― die Unterdrückung der großen Neigung von Kohlenstoffnanoröhren zur Reaggregation (in ein und demselben Medium während des Alterungsprozesses oder während der Verarbeitung einer solchen Dispersion zum fertigen Werkstoff). Diese Schwierigkeiten bei der Kohlenstoffnanoröhren-Verarbeitung fußen möglicherweise unter anderen auf dem hydrophoben Charakter der Kohlenstoffnanoröhren-Oberfläche, mechanischen Verhakungen der Fasern im Agglomerat bzw. später durch Diffusionsprozesse und dem hohen Aspektverhältnis dieser quasi eindimensionalen Struktur.

US 2007/21450 A1 beschreibt ein Verfahren zur Herstellung von Nanoröhren-Kompositmaterialien, wobei zunächst eine Nanoröhren-Dispersion aus einer Mehrzahl von Nanoröhren und einer Flüssigkeit hergestellt wird, diese mit einer Polymerschmelze kontaktiert wird und beide miteinander vermischt werden, um eine Nanoröhren-Komposit-Schmelze zu erhalten und die Flüssigkeit durch Verdampfen entfernt wird. In dem dort beschriebenen Verfahren werden die CNT Agglomerate mittels Energieeintrag in der Flüssigkeit zerstört und die CNT dabei vereinzelt beziehungsweise dispergiert. Vorzugsweise erfolgt hierbei das Dispergieren mittels Ultraschall. Die Nanoröhrchen-Konzentration in der Flüssigkeit ist sehr niedrig, in der Regel unterhalb 1 Gewichts-%.

WO 2008/106572 A1 offenbart eine Polymerzusammensetzung, umfassend eine Harzmatrix mit einer Mischung eines Harzes und Kohlenstoffnanoröhren sowie eine Polymermatrix. Die Polymerzusammensetzung wird erhalten, indem die Harzmatrix und die Polymermatrix in der Schmelze miteinander vermischt werden. Jedoch wird auch hier ein Dispergierschritt zur Herstellung der Harzmatrix als erforderlich erachtet, das heißt, die CNTs werden mittels Energieeintrag (Extrusion) zunächst in der Harzmatrix vereinzelt und dieses Masterbatch wird anschließend mit dem Polymer vermischt.

WO 2009/001324 A2 beschäftigt sich mit der Verwendung von Nanoröhren aus wenigstens einem Element der Gruppen IIIa, IVa und Va des Periodensystems zur Verbesserung der mechanischen Eigenschaften einer polymeren Matrix umfassend wenigstens ein semikristallines thermoplastisches Polymer bei hohen Temperaturen. Eine Möglichkeit zur Vermischung der Nanoröhren und der Polymermatrix ist die direkte Compoundierung in einem Extruder. Als weitere Möglichkeit wird eine Vordispergierung (Vereinzelung der Nanoröhren) in einem Lösungsmittel beschrieben. Im Speziellen werden hierbei Ultraschallbehandlung oder Rotor-Stator-Mühlen als Möglichkeiten zum Dispergieren genannt.

WO 2010/051942 A1 betrifft eine Zusammensetzung umfassend ein Propylen-Olefin-Copolymerwachs und Kohlenstoffnanoröhren. Hinsichtlich des Einarbeitens der Nanoröhren wird nur offenbart, dass ein gleichzeitiges Mischen erfolgen kann.

Das vorherige Dispergieren von Kohlenstoffnanoröhren in einem Dispergiermedium vor der Einarbeitung in Polymere, beispielsweise durch Ultraschallbehandlung oder mechanische Einwirkung, ist immer mit einem erhöhten Energieaufwand für den Gesamtprozess verbunden.

Die Untermischung einer CNT-haltigen Flüssigkeit in ein Polymer ist auf Grund der sehr unterschiedlichen Viskositäten mit erheblichen Schwierigkeiten verbunden, insbesondere bei wirtschaftlich zu bevorzugenden Mischprozessen wie Vermischung im Kneter, Extruder oder Walzenstuhl. Das anschließende Verdampfen der Flüssigkeit ist vor allem bei sehr verdünnten Nanoröhrendispersionen mit erheblichem Energieaufwand verbunden und bringt insbesondere beim industriellen Maßstab erhebliche Probleme wegen des nötigen Energieeintrages mit sich. Auch stellt die reproduzierbare Dosierung der Dispersionen in die Schmelze industriell eine technische Herausforderung dar.

Hinsichtlich des direkten Einarbeitens von CNTs in eine Polymerschmelze stellt sich zusätzlich die Frage, ob die Agglomerate der Nanoröhren in zufriedenstellender Weise aufgebrochen werden, um vereinzelte, im Polymer dispergierte Nanoröhren zu erhalten.

Die vorliegende Erfindung hat sich daher die Aufgabe gestellt, ein Verfahren zur Herstellung von elektrisch leitfähigen und/oder mechanisch gesteigerten Polymer-Kohlenstoffnanoröhren-Kompositen dahingehend zu verbessern, dass der Gesamtenergieaufwand des Verfahrens verringert und gleichzeitig eine hoher Vereinzelungsgrad der Nanoröhren (Dispergiergüte) erreicht wird.

Die Aufgabe wird erfindungsgemäß gelöst durch ein Verfahren zur Herstellung von Polymer-Kohlenstoffnanoröhren-Kompositen, umfassend die Schritte:
(A) Bereitstellen von Kohlenstoffnanoröhren-Agglomeraten mit einer durchschnittlichen Agglomeratgröße von ≥ 0,02 mm bis ≤ 6 mm;
(B) Kontaktieren der Kohlenstoffnanoröhren-Agglomerate mit einem Tränkungsmaterial, wobei das Kontaktieren derart durchgeführt wird, dass ≥ 50 Gewichts-%, bezogen auf das Gewicht der Kohlenstoffnanoröhrchen, der Kohlenstoffnanoröhren-Agglomerate nach dem Kontaktieren immer noch eine durchschnittliche Agglomeratgröße von ≥ 0,02 mm aufweisen; und
(C) Einarbeiten der in Schritt (B) erhaltenen, mit einem Tränkungsmaterial kontaktierten Kohlenstoffnanoröhren-Agglomerate in ein thermoplastisches Polymermaterial oder Reaktivharzsystem.

Überraschenderweise wurde gefunden, dass sich durch das erfindungsgemäße Verfahren beim Einarbeiten in Schritt (C) die zuvor im Wesentlichen intakten Agglomerate aufbrechen lassen und dadurch sich die Kohlenstoffnanoröhren im Polymer besser als bei einer direkten Compoundierung ohne Tränkungsmaterial dispergieren lassen. Zum Einen wurde festgestellt, dass bei der Einarbeitung selber weniger Energie benötigt wird. Zusätzlich wird viel Energie dadurch eingespart, dass eine Vordispergierung, beispielsweise durch Ultraschallbehandlung einer Dispersion der Aggregate in einer Flüssigkeit, vermieden wird.

Das Verfahren löst auch auf einfache Weise die Einbringung einer und Vermischung eines niedrigviskosen mit einem hochviskosen Material, da die in den Kohlenstoffnanoröhren-Agglomeraten aufgesaugte niedrigviskose Flüssigkeit beim Dispergieren der Agglomerate in dem höherviskosen Material freigesetzt und sofort vermischt wird.

Außerdem ist die Durchführung und Handhabung, zum Beispiel bei der Dosierung, sehr einfach und erfordert keinen technischen Aufwand oder Umbau seitens des Anwenders im Vergleich zur Verarbeitung nicht getränkter CNT.

Ein weiterer Vorteil des erfindungsgemäßen Verfahrens liegt in der Reduzierung des Staubungsverhaltens der Kohlenstoffnanoröhren, wodurch die Handhabung vereinfacht und eine mögliche Exposition mit CNTs bei der Extrusion reduziert wird.

Kohlenstoffnanoröhren im Sinne der Erfindung sind alle einwandigen oder mehrwandigen Kohlenstoffnanoröhren vom Zylinder-Typ (z.B. in US-A 5,747,161; WO 86/ 03455), Scroll-Typ, Multiscroll-Typ, Cup-stacked Typ aus einseitig geschlossenen oder beidseitig offenen, konischen Bechern bestehend (z.B. in EP-A 198,558 und US 7018601 B2), oder mit zwiebelartiger Struktur. Bevorzugt sind mehrwandige Kohlenstoffnanoröhren vom Zylinder-Typ, Scroll-Typ, Multiscroll-Typ und Cup-stacked Typ oder deren Mischungen einzusetzen. Günstig ist es, wenn die Kohlenstoffnanoröhren ein Verhältnis von Länge zu Außendurchmesser von ≥ 5, bevorzugt ≥ 100 haben.

Im Unterschied zu den bereits erwähnten bekannten Kohlenstoffnanoröhren vom Scroll-Typ mit nur einer durchgehenden oder unterbrochenen Graphenlage existieren auch Kohlenstoffnanoröhren-Strukturen, die aus mehreren Graphenlagen bestehen, welche zu einem Stapel zusammengefasst und aufgerollt vorliegen. Man spricht hierbei vom Multiscroll-Typ. Diese Kohlenstoffnanoröhren werden in DE 10 2007 044031 A1 beschrieben, auf die in vollem Umfang Bezug genommen wird. Diese Struktur verhält sich zu den Kohlenstoffnanoröhren vom einfachen Scroll-Typ vergleichsweise wie die Struktur mehrwandiger zylindrischer Kohlenstoffnanoröhren (cylindrical MWNT) zur Struktur der einwandigen zylindrischen Kohlenstoffnanoröhren (cylindrical SWNT).

Anders als bei den zwiebelartigen Strukturen (onion type structure) verlaufen die einzelnen Graphenbeziehungsweise Graphitschichten in diesen Kohlenstoffnanoröhren im Querschnitt gesehen offenbar durchgehend vom Zentrum der Kohlenstoffnanoröhren bis zum äußeren Rand ohne Unterbrechung. Dies kann zum Beispiel eine verbesserte und schnellere Interkalierung anderer Materialien im Röhrchengerüst ermöglichen, da mehr offene Ränder als Eintrittszone der Interkalate zur Verfügung stehen im Vergleich zu Kohlenstoffnanoröhren mit einfacher Scrollstruktur (Carbon 1996, 34, 1301-3) oder CNTs mit zwiebelartiger Struktur (Science 1994, 263, 1744-7).

Erfindungsgemäß ist vorgesehen, dass in Schritt (A) die Kohlenstoffnanoröhren in Form von Agglomeraten bereitgestellt werden. Die agglomerierte Form ist diejenige Form von Kohlenstoffnanoröhren, in der sie im Handel erhältlich sind. Es lassen sich mehrere Strukturtypen von Agglomeraten ( siehe z.B. Moy US6294144B1) unterscheiden: die Vogelneststruktur ("bird's nest", BN), die Kammgarnstruktur ("combed yarn", CY) und die offene Netzstruktur ("open net", ON). Weitere Agglomeratstrukturen sind bekannt, z.B. eine, bei der sich die Kohlenstoffnanoröhrchen in Form gebauschter Garne anordnen (Hocke, WO PCT/EP2010/004845). Weiterhin beschrieben sind über Flächen parallel ausgerichtete Nanoröhren in Form von Teppichen oder Wäldern, sogenannte "Forest"-Strukturen (z.B. Patent Dai US6232706 und Lemaire US7744793B2). Hierbei sind die benachbarten Röhren überwiegend parallel zueinander ausgerichtet. Die genannten Agglomeratformen können sowohl beliebig miteinander gemischt oder als Mischhybrid, das heißt verschiedene Strukturen innerhalb eines Agglomerates, verwendet werden.

Die bereitgestellten Agglomerate weisen eine durchschnittliche Agglomeratgröße von ≥ 0,02 mm auf. Dieser Wert kann mittels Laserbeugungsspektrometrie (ein Beispiel für ein Gerät ist der Mastersizer MS 2000 mit Dispergiereinheit Hydro S der Firma Malvern; in Wasser) ermittelt werden. Die Obergrenze der Agglomeratgröße kann beispielsweise < 6 mm sein. Vorzugsweise beträgt die durchschnittliche Agglomeratgröße ≥ ,05 mm bis ≤ 2 mm und mehr bevorzugt ≥ 0,1 mm bis ≤ 1 mm.

In Schritt (B) des erfindungsgemäßen Verfahrens werden die Agglomerate mit einem Tränkungsmaterial kontaktiert. Das Tränkungsmaterial ist hierbei unter den in Schritt (B) herrschenden Bedingungen flüssig und benetzt zumindest einen Teil der Oberfläche der Kohlenstoffnanoröhren.

Das Tränkungsmittel selbst kann eine eigens hierfür ausgewählte Substanz sein oder auch eine Substanz, die üblicherweise in Polymere eingearbeitet wird. Beispiele für diesen letzteren Fall sind Flammschutzmittel, Entformungsmittel, Weichmacher, Stabilisatoren oder andere in der Polymerindustrie übliche Additive in Substanz, als Dispersion oder in einem Lösungsmittel. Eine weitere Möglichkeit ist, dass das Tränkungsmittel eine Komponente eines reaktiven Systems darstellt oder enthält. Hier sind insbesondere Polyole, Isocyanate, Epoxide, Amine und Phenole zu nennen, die zu Polyurethan-, Epoxid- bzw. Phenolharzen umgesetzt werden. Das Tränkungsmaterial kann in Form einer wässrigen oder nicht-wässrigen Lösung oder Dispersion vorliegen.

Das Kontaktieren wird hierbei so durchgeführt, dass ≥ 50 Gewichts-%, bevorzugt > 75 Gewichts-% und besonders bevorzugt ≥ 90 Gewichts-%, jeweils bezogen auf das Gewicht der Kohlenstoffnanoröhren, der Agglomerate nach dem Kontaktieren immer noch die Agglomeratgröße im Bereich von ≥ 0,02 mm aufweisen. Es wird folglich angestrebt, gerade kein oder nur ein geringes Aufbrechen der Aggregate beim Kontaktieren zu erreichen. Je nach Tränkungsmittel und Menge sowie Ausführung kann es auch zu Verklumpungen kommen, wodurch die ursprünglichen Agglomerate zu größeren Agglomeraten zusammenkleben. Dieser Fall ist erfindungsgemäß mit eingeschlossen. Das Kontaktieren kann beispielsweise in einem Trommelmischer oder Taumeltrockner erfolgen, aber auch andere dem Fachmann bekannte Verfahren und Apparate können zur Anwendung kommen.

Beim Kontaktieren verbleibt zumindest ein Teil des Tränkungsmaterials an den Agglomeraten, bevor sie im darauffolgenden Schritt des Verfahrens eingesetzt werden. Hierin mit eingeschlossen ist der Fall, dass das Tränkungsmittel eine Lösung bzw. Dispersion eines Stoffes ― beispielsweise eines Oligomers oder Polymers in einem Lösungsmittel zur besseren Einstellung einer bestimmten, niedrigen Viskosität zur besseren Diffusion in das Agglomerat ― darstellt, und durch Abdampfen, Destillieren oder andere Trennverfahren das Lösungsmittel nach dem Tränken wieder entfernt wurde.

Der Schritt (C) des erfindungsgemäßen Verfahrens beinhaltet das Einarbeiten der in Schritt (B) erhaltenen Agglomerate. Wie bereits geschildert, sollen möglichst intakte Agglomerate hierzu verwendet werden. Das Einarbeiten geschieht in ein thermoplastisches Polymermaterial oder in ein Reaktivharzsystem. Unter "Reaktivharzsystem" ist hierbei eine Reaktionsmischung zu verstehen, die zu einem Polymer reagiert. Insbesondere kann es sich um Polyurethane, Phenol- und Epoxidharze bildende Systeme handeln.

Ausführungsformen des erfindungsgemäßen Verfahrens werden nachfolgend geschildert, wobei die Ausführungsformen beliebig miteinander kombiniert werden können, sofern sich nicht aus dem Zusammenhang eindeutig das Gegenteil ergibt.

In einer Ausführungsform des erfindungsgemäßen Verfahrens sind die die Agglomerate bildenden Kohlenstoffnanoröhren mehrwandige Kohlenstoffnanoröhren mit einem durchschnittlichen äußeren Durchmesser von ≥ 3 nm bis ≤ 100 nm, vorzugsweise ≥ 5 mm bis ≥ 25 mm und einem Verhältnis von Länge zu Durchmesser von ≥ 5, vorzugsweise ≥ 100.

In einer weiteren Ausführungsform des erfindungsgemäßen Verfahrens ist das Tränkungsmaterial derart ausgewählt, dass es bei der in Schritt (B) herrschenden Temperatur eine Viskosität von ≥ 0,2 mPas bis ≤ 20000 mPas aufweist. Vorzugsweise beträgt die Viskosität ≥ 1 mPas bis ≤ 10000 mPas und besonders bevorzugt ist ≥ 10 mPas bis ≤ 2000 mPas. Bei solchen Viskositäten kann das Tränkungsmittel auch im Inneren der Aggregate liegende Bereiche besser erreichen und das Agglomerat insgesamt besser und gleichmäßiger infiltrieren.

In einer weiteren Ausführungsform des erfindungsgemäßen Verfahrens ist das Tränkungsmaterial derart ausgewählt, dass dessen Schmelzpunkt unterhalb der in Schritt (C) herrschenden Temperatur liegt. So kann beispielsweise ein bei Raumtemperatur festes Tränkungsmittel dafür sorgen, dass die Agglomerate nicht miteinander verkleben und dass trotzdem bei der Einarbeitung die Vorteile eines flüssigen Tränkungsmittels genutzt werden können.

In einer weiteren Ausführungsform des erfindungsgemäßen Verfahrens umfasst das Tränkungsmaterial eine wässrige Lösung und/oder Dispersion eines Polymers. Beispielsweise kann es sich um eine wässrige Lösung von Polyvinylpyrrolidon (PVP), eines Acrylates, eines Latex basierend auf Styrene und/oder Acrylnitril und ähnlicher Systeme handeln. Auf diese Weise können auch sehr hochmolekulare Polymere, die z.B. nur schwierig oder gar nicht mittels Extrusion verarbeitet werden können, unter Extrusionsbedingungen mit Kohlenstoffnanoröhren vermischt und ein Komposit hergestellt werden. Ein weiterer Vorteil dieser Verarbeitung besteht darin, dass Latex-CNT basierte Systeme mit sehr hohen CNT Konzentrationen hergestellt werden können, wie es z.B. für Masterbatche wünschenswert ist.

In einer weiteren Ausführungsform des erfindungsgemäßen Verfahrens umfasst das Tränkungsmaterial Substanzen, die ausgewählt sind aus der Gruppe umfassend Polyether, Ester, Ketone, Phosphate, Phosphonate, Sulfonate, Sulfonamine, Carbonate, Carbamate, Amine, Amide, Silikone, organische Verbindungen mit langkettigen Alkylgruppen, Wachse, Glyceride, Fette, Benzoate, Phthalate, Adipinsäurederivate, Bernsteinsäurederivate und/oder monofunktionelle Epoxide. Bevorzugte organische Verbindungen mit langkettigen Alkylgruppen weisen C₆-Alkylgruppen, mehr bevorzugt C₁₂- oder höher homologe Alkylgruppen auf. Bevorzugte Amine sind Polyether-Monoamine. Ein Beispiel eines bevorzugten Esters ist Resorcinol Bis(Diphenyl Phosphat), welches unter der Bezeichnung RDP als Flammschutzmittel eingesetzt wird.

In einer weiteren Ausführungsform des erfindungsgemäßen Verfahrens umfasst das Tränkungsmaterial ionische Flüssigkeiten, insbesondere solche, die auf Basis von Stickstoff (z.B. Ammonium, Imidazolium - Ionen) bzw. Phosphor (z.B. Phosphonium - Ionen) aufgebaut sind.

Das Tränkungsmaterial kann in einem Lösungsmittel vorliegen. Beispiele für Lösungsmittel sind Wasser, Aceton, Nitrile, Alkohole, Dimethylformamid (DMF), N-Methylpyrrolidon (NMP), Pyrrolidonderivate, Butylacetat, Methoxypropylacetat, Alkylbenzene und Cyclohexanderivate.

In einer weiteren Ausführungsform des erfindungsgemäßen Verfahrens sind die in Schritt (B) erhaltenen, mit der Tränkungsflüssigkeit kontaktierten Kohlenstoffnanoröhren-Agglomerate bei Raumtemperatur rieselfähig. Als Rieselfähigkeit wird das Ausmaß der freien Beweglichkeit oder das Fließverhalten von Schüttgütern bezeichnet. Insbesondere zeigen die in Schritt (B) erhaltenen Agglomerate eine gute Rieselfähigkeit. Die Fließzahl dieser Agglomerate ist mindestens > 10 mL/s, besser > 15 mL/s, bevorzugt > 20 mL/s und besonders bevorzugt > 25 mL/s (ermittelbar mit dem Rieselfähigkeitsgerät von der Firma Karg-Industrietechnik (Code-Nr. 1012.000) Modell PM und einer 15 mm Düse gemäß Norm ISO 6186). Rieselfähige Aggregate zeigen deutliche Vorteile bei ihrer Dosierung und Verarbeitung. Der Grad der Rieselfähigkeit lässt sich über Art und Menge des Tränkungsmittels steuern.

In einer weiteren Ausführungsform des erfindungsgemäßen Verfahrens beträgt in Schritt (B) das Gewichtsverhältnis von Kohlenstoffnanoröhren-Agglomeraten zu Tränkungsmaterial ≥ 1:4 bis ≤ 10:1. Vorzugsweise beträgt dieses Verhältnis ≥ 1:2 bis ≤ 5:1 und besonders bevorzugt > 1:1.5 bis < 3:1, um eine besonders gute Rieselfähigkeit zu gewährleisten.

In einer weiteren Ausführungsform des erfindungsgemäßen Verfahrens beträgt nach Schritt (B) der Gewichtsanteil von Kohlenstoffnanoröhren-Agglomeraten im getränkten Material ≥ 20 Gewichts-%, bevorzugt ≥ 35 Gewichts-% und besonders bevorzugt ≥ 40 Gewichts-% an Kohlenstoffnanoröhrchen. Falls das Trägermaterial nach dem Einarbeiten im Polymer verbleibt, ist es günstig, zur Einstellung von gewünschten Eigenschaften im fertigen Polymer eine große Flexibilität hinsichtlich seines Anteils im Polymer zu behalten.

In einer weiteren Ausführungsform des erfindungsgemäßen Verfahrens werden in Schritt (C) die in Schritt (B) erhaltenen, mit dem Tränkungsmaterial kontaktierten Kohlenstoffnanoröhren-Agglomerate in das thermoplastische Polymermaterial oder das Reaktivharzsystem in einem Anteil von ≥ 0,01 Gewichts-% bis ≤ 50 Gewichts-% (bezogen auf Kohlenstoffnanoröhren) eingearbeitet. Vorzugsweise beträgt dieser Anteil > 0,5 Gewichts-% bis ≤ 30 Gewichts-%. Das erfindungsgemäße Verfahren bietet den Vorteil, dass auch höhere Gehalte an Kohlenstoffnanoröhren eingearbeitet werden können, als bislang möglich war.

Das Einarbeiten in Schritt (C) kann beispielsweise in einem Kneter, Walzenstuhl oder Extruder stattfinden. Dieses ist aus ökonomischen Gründen bevorzugt, wobei aber auch andere dem Fachmann bekannte Dispergiermaschinen verwendet werden können. Bevorzugt ist ein Zweiwellenextruder mit einem L/D Verhältnis > 10, bevorzugt > 20, besonders bevorzugt > 25 und am besten > 35. Besonders bevorzugt ist ein ko-rotierender (gleichlaufender) Doppelschneckenextruder.

In einer weiteren Ausführungsform des erfindungsgemäßen Verfahrens folgen die Schritte (B) und (C) unmittelbar aufeinander. Durch geeignete Wahl des Maschinenaufbaus und der Verfahrensbedingungen können die Schritte so miteinander verbunden werden, dass der Tränkungsschritt *in situ* durchgeführt wird und der Dispergier- dem Mischschritt unmittelbar folgt. Der Prozess erscheint dadurch quasi gleichzeitig. Dies ist zum Beispiel möglich, wenn das Tränkungsmittel eine niedrigere Viskosität und/ oder leichter Aufzuschmelzen geht als das Polymer.

So können zum Beispiel die CNT-Agglomerate, das Tränkungsmaterial sowie das Polymer (beziehungsweise der Harzprecursor) zusammen in ein Mischaggregat eingegeben werden (alles in den Haupteinzug) oder die CNT Agglomerate und das Tränkungsmittel zuerst (Hauptbeziehungsweise Seiteneinzug), und dann wird in einem zeitlich versetzten Schritt das Polymer (beziehungsweise Harzprecursor) zugegeben (Seiteneinzug). Die Benetzung des CNT- Agglomerates soll zunächst durch das Tränkungsmaterial erfolgen, bevor eine Benetzung durch das Polymer erfolgt.

In einer weiteren Ausführungsform des erfindungsgemäßen Verfahrens umfasst das thermoplastische Polymermaterial Polyamide (beispielsweise PA.6, PA.66, PA 12 oder PA11), Polycarbonat (PC), Homo- und Copolymere des Polyoxymethylene (POM-H, POM-C), thermoplastische Polyurethane (TPU), Polyolefine (beispielsweise PP, PE, HDPE, COC, LCP einschließlich modifizierter Varianten), Polyethylentherephtalat (PET), Polybutylentherephtalat (PBT), Polyacrylate (beispielsweise Polymethylmethacrylat PMMA), Styrolpolymere (beispielsweise PS, HiPS, ASA, SMA), Polyacrylnitril (PAN), Polystyrenacrylnitril (SAN), Polyacrylnitrilbutadienstyren (ABS), Polyvinylchlorid (PVC), fluorierte Polymere (beispielsweise Polyvinylidenfluoride PVDF, Ethylentetrafluoroethylen ETFE), Perfluorethylenpropylen FEP), Poyletherimid (PEI), Polyetheretherketon (PEEK), Polyphenylensulfid (PPS), Polyphenylensulfon (PSU) oder Polyphenylether (beispielsweise PPO, PPE) oder Blends, Blockcopolymerformen oder Modifikationen der vorgenannten Polymere.

In einer weiteren Ausführungsform des erfindungsgemäßen Verfahrens umfasst das Reaktivharzsystem Epoxide (insbesondere solche aus Bisphenol A und/oder Bisphenol F), Polyurethane (insbesondere solche, die aus aromatischen Diisocyanaten wie Toluol-2,4-diisocyanat TDI und/oder Diphenylmethandiisocyanat MDI oder aliphatischen Diisocyanaten wie Hexamethylendiisocyanat HDI und/oder 3-Isocyanatmethyl-3,5,5-trimethylcyclohexylisocyanat IPDI und/oder 4,4'-Diisocyanatodicyclohexylmethan H₁₂-MDI) aufgebaut sind), Phenolharze, ungesättigte Polyester und/oder Aminoplaste.

Die vorliegende Erfindung betrifft weiterhin mit einem Tränkungsmaterial kontaktierte Kohlenstoffnanoröhren-Agglomerate, wobei ≥ 50 Gewichts-%, bevorzugt ≥ 75 Gewichts-% und besonders bevorzugt ≥ 0 Gewichts-%, bezogen auf das Gewicht der Kohlenstoffnanoröhrchen, der Kohlenstoffnanoröhren-Agglomerate eine durchschnittliche Agglomeratgröße von ≥ 0,02 mm aufweisen.

Die Agglomerate zeichnen sich hierbei dadurch aus, dass das Tränkungsmaterial Substanzen umfasst, die ausgewählt sind aus der Gruppe umfassend Polyether, Ester, Ketone, Phosphate, Phosphonate, Sulfonate, Sulfonamine, Carbonate, Carbamate, Amine, Amide, Silikone, organische Verbindungen mit langkettigen Alkylgruppen, Wachse, Glyceride, Fette, Benzoate, Phthalate, Adipinsäurederivate, Bernsteinsäurederivate und/oder monofunktionelle Epoxide.

Die durchschnittliche Agglomeratgröße beträgt erfindungsgemäß ≥ 0,02 mm. Dieser Wert kann mittels Laserbeugungsspektrometrie (ein Beispiel für ein Gerät ist der Mastersizer MS 2000 mit Dispergiereinheit Hydro S der Firma Malvern; in Wasser) ermittelt werden. Die Obergrenze der Agglomeratgröße kann beispielsweise < 6 mm sein. Vorzugsweise beträgt die durchschnittliche Agglomeratgröße ≥ 0,05 mm bis ≤ 2 mm und mehr bevorzugt ≥ 0,1 mm bis ≤ 1 mm.

Bevorzugte organische Verbindungen mit langkettigen Alkylgruppen weisen C₆-Alkylgruppen, mehr bevorzugt C₁₂- oder höher homologe Alkylgruppen auf.

Das Tränkungsmaterial kann in einem Lösungsmittel vorliegen. Beispiele für Lösungsmittel sind Wasser, Aceton, Nitrile, Alkohole, Dimethylformamid (DMF), N-Methylpyrrolidon (NMP), Pyrrolidonderivate, Butylacetat, Methoxypropylacetat, Alkylbenzene und Cyclohexanderivate.

Bezüglich Details und bevorzugter Ausführungsformen wird zur Vermeidung von Wiederholungen auf die obigen Ausführungen verwiesen.

Ein weiterer Gegenstand der vorliegenden Erfindung ist ein Kohlenstoffnanoröhren umfassendes Polymerkomposit, erhältlich durch ein Verfahren gemäß der vorliegenden Erfindung, wobei der Anteil an Kohlenstoffnanoröhren ≤ 50 Gewichts-% beträgt und der Anteil an in Agglomeraten mit einer durchschnittlichen Agglomeratgröße von ≥ 0,02 mm bis ≤ 6 mm vorliegenden Kohlenstoffnanoröhren an der Gesamtmenge von Kohlenstoffnanoröhren ≤ 10 Gewichts-% beträgt.

Vorzugsweise beträgt der Anteil an Kohlenstoffnanoröhren ≤ Gewichts-% und besonders bevorzugt ≤ 3 Gewichts-%. Es ist weiterhin bevorzugt, dass dieser Anteil ≥ 0,01 Gewichts-% und mehr bevorzugt ≥ 0,1 Gewichts-% beträgt.

Der Anteil an in Agglomeraten mit einer durchschnittlichen Agglomeratgröße von ≥ 0,02 mm bis ≤ 6 mm vorliegenden Kohlenstoffnanoröhren an der Gesamtmenge von Kohlenstoffnanoröhren beträgt vorzugsweise < 5 Gewichts-% und besonders bevorzugt ≤ 2 Gewichts-%.

Wie bereits im Zusammenhang mit dem erfindungsgemäßen Verfahren geschildert, kann das Polymer des Polymerkomposits ein thermoplastisches Polymer oder ein aus einem Reaktivharzsystem erhaltenes Polymer sein. Bezüglich Details und bevorzugter Ausführungsformen wird zur Vermeidung von Wiederholungen auf die obigen Ausführungen verwiesen.

Die vorliegende Erfindung wird anhand der nachfolgenden Beispiele weiter erläutert, ohne jedoch darauf beschränkt zu sein.

### Herstellung der Compounds

Als CNTs wurden Baytubes® C 150 P (Bayer MaterialScience AG) eingesetzt. Diese sind mehrwandige CNTs mit einem mittleren Außendurchmesser von 13 nm bis 16 nm und einer Länge von über 1 µm. Baytubes® C 150 P liegen weiterhin als Agglomerate mit einer durchschnittlichen Teilchengröße von 0,1 mm bis 1 mm vor. Die Schüttdichte beträgt gemäß EN ISO 60 120 kg/m³ bis 170 kg/m³.

### Tränkung:

Die CNT-Agglomerate wurden mit dem in der Tabelle 1-1 angegebenen Tränkungsmaterial in einem Verhältnis von 2 Gewichtsteilen CNTs und 1 Gewichtsteil Tränkungsmaterial in einem Trommelmischer für mindestens 12 Stunden kontaktiert. Wo erforderlich, wurde hierbei zusätzlich aufgeheizt. In den Vergleichsversuchen wurden die CNT-Agglomerate trocken eingearbeitet (ohne Durchtränkungsschritt).

Die CNT-Agglomerate wurden mit dem in den Tabellen 1-2 und 1-4 angegebenen Tränkungsmaterial in einem Verhältnis von 1 Gewichtsteil CNTs und 2 Gewichtsteilen Tränkungsmaterial in einem beheizbaren Taumeltrockner für mindestens eine Stunde kontaktiert. In den Vergleichsversuchen entfiel dieser Schritt.

Die CNT-Agglomerate wurden mit dem in der Tabelle 1-3 angegebenen Tränkungsmaterial in einem Verhältnis von 1 Gewichtsteil CNTs und 2 Gewichtsteilen Tränkungsmaterial in einem Trommelmischer für mindestens 12 Stunden kontaktiert. Wo erforderlich, wurde hierbei zusätzlich aufgeheizt. In den Vergleichsversuchen wurden die CNT-Agglomerate trocken eingearbeitet (ohne Durchtränkungsschritt).

### Methode A: Direktcompound

Die CNTs wurden in einem ZSK-26 Megacompounder (Firma Coperion) mit einem Verhältnis von Länge zu Durchmesser L/D = 37 in ein Polymer eingearbeitet. In den Versuchen mit "PA6" in der Versuchsbezeichnung wurde ein Polyamid 6 (Durethan® B29 von der Firma Lanxess), und in den Versuchen mit der Bezeichnung "PA12" ein Polyamid 12 (Grilamid® TR 55 von der Firma EMS-Grivory) verwendet. Das Polymer wurde vor der Extrusion getrocknet. Die Trocknungseinzelheiten befinden sich in Tabelle 5. Polymer und Füllstoff wurden im Haupteingang des Extruders dosiert. Details zu den Extrusionsbedingungen finden sich in den Tabellen 2-1 bis 2-3. "TM1" bezeichnet hierbei die Verarbeitungstemperatur im Extruder. Der Schneckenbesatz "A" besteht aus ca. 30 % Knet- und Mischelementen und aus ca. 70 % Förderelementen. Der Schneckenbesatz "B" besteht aus ca. 15 % Knet- und Mischelementen und aus ca. 85 % Förderelementen. Das Compound kam als Stränge aus der Düsenplatte des Extruders. Es wurde nach der Extrusion in einem Wasserbad gekühlt, mit einem Luftstrom getrocknet und abschließend granuliert.

In den Versuchen mit der Bezeichnung "HDPE" wurde High Density Polyethylen (Lupolen® 4261 AG von der Firma Lyondell-Basell) verwendet. Die Versuche wurden in einem ZSE 27 MAXX Extruder (Firma Leistritz) mit einem Verhältnis von Länge zu Durchmesser L/D = 45 durchgeführt. Das Polymer wurde vor der Extrusion nicht getrocknet. Polymer und Füllstoff wurden im Haupteingang des Extruders dosiert. Details zu den Extrusionsbedingungen finden sich in Tabelle 2-4. "TM1" bezeichnet hierbei die Verarbeitungstemperatur im Extruder. Der Schneckenbesatz "C" besteht aus ca. 15 % Knetelementen und ca. 85 % Förderelementen. Das Compound kam als Stränge aus der Düsenplatte des Extruders. Es wurde nach der Extrusion in einem Wasserbad gekühlt, mit einem Luftstrom getrocknet und abschließend granuliert.

Es wurden pro Ansatz 2-3 kg Directcompound hergestellt.

### Methode B: Masterbatch und Verdünnung

Zur Herstellung von compoundierten Polymeren via Masterbatch wurde PA12 (Grilamid® TR 55 von der Firma EMS-Grivory) eingesetzt.

In einem ersten Schritt wurde ein Masterbatch (Ansatzgröße = 3-4 kg) mit 15 Gewichts-% CNT hergestellt. CNTs wurden in einem ZSK-26 Megacompounder (Firma Coperion) mit einem Verhältnis von Länge zu Durchmesser L/D = 37 in das Polyamid eingearbeitet, welches vor der Extrusion getrocknet wurde. Das Polymer wurde getrocknet (die Trocknungseinzelheiten befinden sich in Tabelle 5) und in den Haupteingang des Extruders dosiert. Details zu den Extrusionsbedingungen finden sich in der Tabelle 2-3. "TM1" bezeichnet hierbei die Verarbeitungstemperatur im Extruder. Es wurde im Extruder der Schneckenbesatz "B" verwendet, der aus ca. 15 % Knet- und Mischelementen und aus ca. 85 % Förderelementen besteht. Das Compound kam in Strängen aus der Düsenplatte des Extruders. Es wurde nach der Extrusion in einem Wasserbad gekühlt, mit einem Luftstrom getrocknet und abschließend granuliert.

Das Masterbatch wurde mit reinem PA12 in einem nächsten Extrusionsschritt verdünnt. Die Verdünnung erfolgte wiederum auf dem ZSK-26 Megacompounder. Polymer und Masterbatch wurden bei denselben Bedingungen getrocknet (s. Tabelle 5) und zusammen in den Haupteingang des Extruders dosiert. Die Extrusion erfolgte entsprechend der obigen Beschreibung.

### Ausprüfung

Ein Teil des compoundierten Polymers wurde in einer beheizten Presse (Polystat 400S von der Firma Schwabenthan) zu einer Pressplatte geformt (80 mm Durchmesser, 2 mm dick). Der Herstellungsprozess der Pressplatten wurde für jeden Polymertyp in Tabelle 6 dokumentiert. Nach dem Abkühlen wurde die Pressplatte in der Mitte mit 2 parallelen Streifen einer Silberfarbe so versehen, dass ein an 2 gegenüberliegenden Seiten offenes Quadrat mit einer Seitenlänge von 2,5 cm gebildet wurde. Es wurde erneut getrocknet und der Oberflächenwiderstand mit einem Widerstandsmessgerät gemessen. Ein weiterer Teil des compoundierten Polymers wurde mittels Spritzgussverfahren zu einer als Injektionsplatte bezeichneten Platte geformt. Der Oberflächenwiderstand wurde gemäß ASTM D-257 mit einer auf der Platte angeordneten Ringelektrode (Messgerät Monroe Modell 272A) gemessen. Die Ergebnisse sind in den Tabellen 3-1 bis 3-4 dokumentiert.

Ebenfalls in Tabellen 3-1 bis 3-4 sind die Dispersionsgrade der CNTs im Polymer aufgeführt. Zur Bestimmung dieses Parameters wurde eine dünne Probenschicht mittels Mikrotom präpariert und unter dem Mikroskop photographiert. Das erhaltene Bild wurde mit dem frei erhältlichen ImageJ-Programm elektronisch ausgewertet. Der Flächenanteil der Agglomerate in den Aufnahmen A_{AGG} wurde hierbei bestimmt. Unter der Annahme einer Tiefe von 1 Einheit wurde der Volumenanteil der Agglomerate V_{AGG} gemäß V_{AGG} = A_{AGG} · 1 berechnet. Der Massenanteil der nicht dispergierten CNTs X_{AGG} wurde anhand der angenommen Dichte der Agglomerate ρ_{AGG} und der Dichte des reinen Polymers ρ_{POLY} berechnet: X_{AGG} = (V_{AGG} · ρ_{AGG})/((V_{AGG} · ρ_{AGG}) + (1 ― V_{AGG}) · ρ_{POLY}). Der Massenanteil der effektiv dispergierten CNTs X_{EFF} wurde von den Füllanteil der CNTs X_{TOT} und der nicht dispergierten CNT-Fraktion X_{AGG} berechnet: X_{EFF} = X_{TOT} ― X_{AGG}. Der Prozentsatz der dispergierten CNTs entspricht dem Quotienten X_{EFF}/X_{TOT}.

Mechanische Analysen des compoundierten Polymermaterials sind in Tabellen 4-1 bis 4-3 dokumentiert. Zug-Modul, Streckspannung, Streckdehnung, Zugfestigkeit, Bruchspannung und Bruchdehnung wurden gemäß ISO 527 bestimmt. Die Izod-Kerbschlagzähigkeit wurde gemäß ASTM D256A ermittelt.

Alle mechanischen Prüfungen wurden an mindestens 10 Prüfkörpern durchgeführt und sind als Mittelwert angegeben.

**Tabelle 1-1**

| **Versuch Nr.** | **Tränkungsmaterial** |
|---|---|
| PA6X01 | Vergleichsversuch mit direkter Einarbeitung in das Polymer |
| PA6X02 | Vergleichsversuch mit direkter Einarbeitung in das Polymer |
| PA6X03 | Vergleichsversuch mit direkter Einarbeitung in das Polymer |
| PA6X04 | Surfonamine B200 (Polyether-Monoamin, Firma Huntsman) |
| PA6X05 | Surfonamine B200 (Polyether-Monoamin, Firma Huntsman) |
| PA6X06 | Surfonamine B200 (Polyether-Monoamin, Firma Huntsman) |
| PA6X07 | Surfonamine L207 (Polyether-Monoamin, Firma Huntsman) |
| PA6X08 | Surfonamine L207 (Polyether-Monoamin, Firma Huntsman) |
| PA6X09 | Surfonamine L207 (Polyether-Monoamin, Firma Huntsman) |
| PA6X10 | Surfonamine L200 (Polyether-Monoamin, Firma Huntsman) |
| PA6X11 | Surfonamine L200 (Polyether-Monoamin, Firma Huntsman) |
| PA6X12 | Surfonamine L200 (Polyether-Monoamin, Firma Huntsman) |

**Tabelle 1-2**

| **Versuch Nr.** | **Tränkungsmaterial** |
|---|---|
| PA6X13 | Vergleichsversuch mit direkter Einarbeitung in das Polymer |
| PA6X14 | Vergleichsversuch mit direkter Einarbeitung in das Polymer |
| PA6X15 | Vergleichsversuch mit direkter Einarbeitung in das Polymer |
| PA6X16 | Reofos® RDP (Resorcinol Bis(Diphenyl Phosphat)), Firma Chemtura Corporation |
| PA6X17 | Reofos® RDP (Resorcinol Bis(Diphenyl Phosphat)), Firma Chemtura Corporation |
| PA6X18 | Reofos® RDP (Resorcinol Bis(Diphenyl Phosphat)), Firma Chemtura Corporation |

**Tabelle 1-3**

| **Versuch Nr.** | **Tränkungsmaterial** |
|---|---|
| PA12X01 | Vergleichsversuch mit direkter Einarbeitung in das Polymer |
| PA12X02 | Vergleichsversuch mit direkter Einarbeitung in das Polymer |
| PA12X03 | Vergleichsversuch mit direkter Einarbeitung in das Polymer |
| PA12X04 | Vergleichsversuch - Masterbatch in PA12 |
| PA12X05 | Vergleichsversuche - Verdünnung von Masterbatch in PA12 |
| PA12X06 | Vergleichsversuche - Verdünnung von Masterbatch in PA12 |
| PA12X07 | Vergleichsversuche - Verdünnung von Masterbatch in PA12 |
| PA12X08 | Reofos® RDP (Resorcinol Bis(Diphenyl Phosphat)), Firma Chemtura Corporation |
| PA12X09 | Reofos® RDP (Resorcinol Bis(Diphenyl Phosphat)), Firma Chemtura Corporation |
| PA12X10 | Reofos® RDP (Resorcinol Bis(Diphenyl Phosphat)), Firma Chemtura Corporation |

**Tabelle 1-4**

| **Versuch Nr.** | **Tränkungsmaterial** |
|---|---|
| HDPEX01 | Vergleichsversuch mit direkter Einarbeitung in das Polymer |
| HDPEX02 | Vergleichsversuch mit direkter Einarbeitung in das Polymer |
| HDPEX03 | Vergleichsversuch mit direkter Einarbeitung in das Polymer |
| HDPEX04 | Reofos® RDP (Resorcinol Bis(Diphenyl Phosphat)), Firma Chemtura Corporation |
| HDPEX05 | Reofos® RDP (Resorcinol Bis(Diphenyl Phosphat)), Firma Chemtura Corporation |

**Tabelle 2-1**

| **Versuch Nr.** | **Eintrag [kg/h]** | **U/min** | **Drehmoment [%]** | **Energieeintrag [kWh/kg]** | **TM1 [°C]** | **Schneckenbesatz** |
|---|---|---|---|---|---|---|
| PA6X01 | 24,7 | 400,0 | 70,5 | 0,253 | 281,0 | A |
| PA6X02 | 25,3 | 400,0 | 72,5 | 0,255 | 283,0 | A |
| PA6X03 | 23,8 | 400,0 | 75,0 | 0,280 | 288,0 | A |
| PA6X04 | 24,7 | 400,0 | 61,5 | 0,221 | 279,0 | A |
| PA6X05 | 25,3 | 400,0 | 61,5 | 0,216 | 279,0 | A |
| PA6X06 | 25,9 | 400,0 | 63,5 | 0,217 | 280,0 | A |
| PA6X07 | 24,7 | 400,0 | 60,0 | 0,215 | 279,0 | A |
| PA6X08 | 25,3 | 400,0 | 63,0 | 0,221 | 280,0 | A |
| PA6X09 | 25,9 | 400,0 | 64,5 | 0,221 | 281,0 | A |
| PA6X10 | 25,1 | 400,0 | 64,5 | 0,228 | 280,0 | A |
| PA6X11 | 25,9 | 400,0 | 65,0 | 0,223 | 281,0 | A |
| PA6X12 | 26,9 | 400,0 | 67,0 | 0,221 | 283,0 | A |

**Tabelle 2-2**

| **Versuch Nr.** | **Eintrag [kg/h]** | **U/min** | **Drehmoment [%]** | **Energieeintrag [kWh/kg]** | **TM1 [°C]** | **Schneckenbesatz** |
|---|---|---|---|---|---|---|
| PA6X13 | 25,0 | 400,0 | 72,0 | 0,256 | 282,0 | A |
| PA6X14 | 25,0 | 400,0 | 73,5 | 0,261 | 284,0 | A |
| PA6X15 | 23,8 | 400,0 | 72,5 | 0,271 | 288,0 | A |
| PA6X16 | 25,0 | 400,0 | 49,5 | 0,176 | 280,0 | A |
| PA6X17 | 25,0 | 400,0 | 64,0 | 0,227 | 282,0 | A |
| PA6X18 | 23,8 | 400,0 | 51,0 | 0,190 | 280,0 | A |

**Tabelle 2-3**

| **Versuch Nr.** | **Eintrag [kg/h]** | **U/min** | **Drehmoment [%]** | **Energieeintrag [kWh/kg]** | **TM1 [°C]** | **Schneckenbesatz** |
|---|---|---|---|---|---|---|
| PA12X01 | 25,0 | 400 | 73,0 | 0,259 | 287,0 | B |
| PA12X02 | 25,0 | 400 | 71,5 | 0,254 | 288,0 | B |
| PA12X03 | 25,0 | 400 | 73,5 | 0,261 | 290,0 | B |
| PA12X04 | 15,0 | 400 | 69,5 | 0,411 | 313,0 | B |
| PA12X05 | 25,0 | 400 | 73,0 | 0,259 | 283,0 | B |
| PA12X06 | 25,0 | 400 | 74,0 | 0,263 | 285,0 | B |
| PA12X07 | 25,0 | 400 | 74,5 | 0,265 | 288,0 | B |
| PA12X08 | 25,0 | 400 | 67,0 | 0,238 | 282,0 | B |
| PA12X09 | 25,0 | 400 | 63,0 | 0,224 | 282,0 | B |
| PA12X10 | 25,0 | 400 | 49,0 | 0,174 | 282,0 | B |

**Tabelle 2-4**

| **Versuch Nr.** | **Eintrag [kg/h]** | **U/min** | **Drehmoment [%]** | **Energieeintrag [kWh/kg]** | **TM1 [°C]** | **Schneckenbesatz** |
|---|---|---|---|---|---|---|
| HDPEXOI 1 | 20,0 | 325,0 | 72,0 | 0,314 | 265,1 | C |
| HDPEX02 | 20,0 | 325,0 | 73,0 | 0,318 | 267,1 | C |
| HDPEX03 | 20,0 | 325,0 | 71,0 | 0,309 | 266,0 | C |
| HDPEX04 | 20,0 | 325 | 56,0 | 0,244 | 266,1 | C |
| HDPEX05 | 20,0 | 325 | 53,0 | 0,231 | 266,1 | C |

**Tabelle 3-1 1**

| **Versuch Nr.** | **CNT-Gehalt [Gew.-%]** | **Pressplatte Widerstand [Ohm-sq]** | **Spritzgußplatte Widerstand [Ohm-sq]** | **Dispersionsgrad** |
|---|---|---|---|---|
| PA6X01 | 3,0 | 4,00E+04 | 1,69E+12 | 58% |
| PA6X02 | 5,0 | 1,20E+02 | 5,86E+07 | 59% |
| PA6X03 | 7,5 | 2,70E+01 | 2,81E+05 | 55% |
| PA6X04 | 2,0 | 6,65E+03 | 3,59E+12 | 89% |
| PA6X05 | 3,0 | 2,31E+02 | 2,47E+10 | 87% |
| PA6X06 | 5,0 | 4,50E+01 | 6,54E+06 | 86% |
| PA6X07 | 2,0 | 2,32E+04 | 5,74E+12 | 86% |
| PA6X08 | 3,0 | 7,20E+03 | 1,98E+10 | 85% |
| PA6X09 | 5,0 | 8,31E+01 | 7,94E+06 | 89% |
| PA6X10 | 3,0 | 4,84E+02 | 3,04E+12 | 87% |
| PA6X11 | 5,0 | 9,94E+01 | 2,41E+06 | 83% |
| PA6X12 | 7,5 | 1,58E+02 | 1,19E+06 | 87% |

**Tabelle 3-2**

| **Versuch Nr.** | **CNT-Gehalt [Gew.-%]** | **Pressplatte Widerstand [Ohm-sq]** | **Spritzgußplatte Widerstand [Ohm-sq]** | **Dispersionsgrad** |
|---|---|---|---|---|
| PA6X13 | 3,0 | 2,16E+04 | 2,21E+11 | 74% |
| PA6X14 | 5,0 | 1,09E+03 | 3,98E+09 | 82% |
| PA6X15 | 7,5 | 9,21E+01 | 1,05E+07 | 88% |
| PA6X16 | 3,0 | 7,80E+01 | 8,24E+10 | 99%+ |
| PA6X17 | 5,0 | 2,67E+01 | 5,24E+07 | 99%+ |
| PA6X18 | 7,5 | 9,10E+00 | | 99%+ |

**Tabelle 3-3**

| **Versuch Nr.** | **CNT-Gehalt [Gew.-%]** | **Pressplatte Widerstand [Ohm-sq]** | **Spritzgußplatte Widerstand [Ohm-sq]** | **Dispersionsgrad** |
|---|---|---|---|---|
| PA12X01 | 2,0 | - | 2,17E+12 | 73% |
| PA12X02 | 3,0 | 3,37E+02 | 2,77E+11 | 64% |
| PA12X03 | 5,0 | 3,05E+01 | 1,16E+07 | 67% |
| PA12X04 | 15 | - | - | - |
| PA12X05 | 2,0 | 3,07E+03 | 1,73E+12 | 90% |
| PA12X06 | 3,0 | 8,88E+03 | 2,88E+11 | 88% |
| PA12X07 | 5,0 | - | 1,31E+07 | 94% |
| PA12X08 | 2,0 | 8,66E+02 | 1,03E+12 | 90% |
| PA12X09 | 3,0 | 6,31E+01 | 8,29E+09 | 91% |
| PA12X10 | 5,0 | 3,41E+01 | 2,36E+05 | 96% |

**Tabelle 3-4**

| **Versuch Nr.** | **CNT-Gehalt [Gew.-% ]** | **Pressplatte Widerstand [Ohm-sq]** | **Spritzgußplatte Widerstand [Ohm-sq]** | **Dispersionsgrad** |
|---|---|---|---|---|
| HDPEX01 | 3,0 | 1,02E+10 | - | 88% |
| HDPEX02 | 5,0 | 3,04E+06 | - | 86% |
| HDPEX03 | 7,5 | 5,97E+02 | - | 82% |
| HDPEX04 | 3,0 | 6,87E+09 | - | 99% |
| HDPE05 | 5,0 | 3,42E+04 | - | 99% |

**Tabelle 4-1**

| **Versuch Nr.** | **Zug-Modul RT [MPa] 1 mm/min** | **Streckspannung [MPa], 50 mm/min** | **Streckdehnung [%], 50 mm/min** | **Zugfestigkeit [MPa], 50 mm/min** | **Bruchspannung [MPa], 50 mm/min** | **Bruchdehnung [%], 50 mm/min** | **Izod-Kerbschlagzähigkeit [J/m], 23°C** |
|---|---|---|---|---|---|---|---|
| PA6X01 | 3427 | 0 | 0 | 89,8 | 89,7 | 3,5 | 65 |
| PA6X02 | 3590 | 0 | 0 | 90,9 | 90,5 | 3,1 | 66 |
| PA6X03 | 3777 | 0 | 0 | 82,4 | 82,4 | 2,5 | 51 |
| PA6X04 | 3313 | 89,7 | 4 | 89,7 | 58,3 | 32 | 69 |
| PA6X05 | 3466 | 90,3 | 3,8 | 90,3 | 58,8 | 38,5 | 66 |
| PA6X06 | 3578 | 90,2 | 3,8 | 90,2 | 65,3 | 40 | 62 |
| PA6X07 | 3434 | 88,7 | 3,7 | 88,7 | 61,6 | 46,4 | 63 |
| PA6X08 | 3322 | 88 | 3,8 | 88 | 57,7 | 37 | 62 |
| PA6X09 | 3586 | 87,9 | 3,5 | 87,9 | 64,8 | 48,2 | 67 |
| PA6X10 | 3380 | 86,3 | 3,7 | 86,3 | 60,4 | 44,4 | 74 |
| PA6X11 | 3491 | 83,7 | 3,5 | 83,7 | 65,2 | 49,6 | 57 |
| PA6X12 | 3575 | 84,3 | 3,4 | 84,3 | 72,1 | 40,5 | 59 |

**Tabelle 4-2**

| **Versuch Nr.** | **Zug-Modul RT [MPa] 1 mm/min** | **Streckspannung [MPa], 50 mm/min** | **Streckdehnung [%], 50 mm/min** | **Zugfestigkeit [MPa], 50 mm/min** | **Bruchspannung [MPa], 50 mm/min** | **Bruchdehnung [%], 50 mm/min** | **Izod-Kerbschlagzähigkeit [J/m], 23°C** |
|---|---|---|---|---|---|---|---|
| PA6X13 | 3427 | 0 | 0 | 89,8 | 89,7 | 3,5 | 65 |
| PA6X14 | 3590 | 0 | 0 | 90,9 | 90,5 | 3,1 | 66 |
| PA6X15 | 3777 | 0 | 0 | 82,4 | 82,4 | 2,5 | 51 |
| PA6X16 | 3252 | 83,9 | 3,7 | 83,9 | 60,2 | 38,2 | 63 |
| PA6X17 | 3208 | 79,7 | 3,7 | 79,4 | 60,3 | 50,2 | 96 |
| PA6X18 | - | - | - | - | - | - | - |

**Tabelle 4-3**

| **Versuch Nr.** | **Zug-Modul RT [MPa] 1 mm/min** | **Streckspannung [MPa], 50 mm/min** | **Streckdehnung [%], 50 mm/min** | **Zugfestigkeit [MPa], 50 mm/min** | **Bruchspannung [MPa], 50 mm/min** | **Bruchdehnung [%], 50 mm/min** | **Izod-Kerbschlagzähigkeit [J/m], 23°C** |
|---|---|---|---|---|---|---|---|
| PA12X01 | 2197 | 0 | 0 | 67,4 | 67,4 | 3,9 | 76 |
| PA12X02 | 2252 | 0 | 0 | 60,5 | 60,5 | 4 | 59 |
| PA12X03 | 2374 | 0 | 0 | 65,1 | 65,1 | 3,4 | 60 |
| PA12X04 | - | - | - | - | - | - | - |
| PA12X05 | 2171 | 0 | 0 | 67,6 | 67,4 | 3,9 | 47 |
| PA12X06 | 2203 | 0 | 0 | 65,2 | 65,2 | 3,6 | 55 |
| PA12X07 | 2350 | 0 | 0 | 66,6 | 66,4 | 3,5 | 48 |
| PA12X08 | 2222 | 0 | 0 | 69,2 | 69,2 | 3,9 | 79 |
| PA12X09 | 2326 | 0 | 0 | 67,8 | 67,8 | 3,6 | 85 |
| PA12X10 | 2575 | 0 | 0 | 65,2 | 65,1 | 3 | 60 |

**Tabelle 5**

| **Polymer** | **Trocknungstemperatur [°C]** | **Mindest-Trocknungszeit [Stunden]** |
|---|---|---|
| PA6 | 75 | 5 |
| PA12 | 80 | 4 |
| HDPE | - | - |

**Tabelle 6**

| **Polymer** | **Presstemperatur [°C]** | **Aufschmelzzeit [Minuten]** | **Presszeit [Minuten]** | **Pressdruck [Bar]** |
|---|---|---|---|---|
| PA6 | 280 | 5 | 2 | 50-60 |
| PA12 | 280 | 5 | 2 | 50-60 |
| HDPE | 250 | 5 | 2 | 50-60 |

**Tabelle 7**

| **Polymer** | **Masse-Temperatur [°C]** | **Werkzeug-Temperatur [°C]** | **Einspritz-Geschwindigkeit [mm/s]** |
|---|---|---|---|
| PA6 | 310 (290) | 120 | 10 |
| PA12 | 310 | 90 | 10 |
| HDPE | - | - | - |

### Ergebnisse:

Die erfindungsgemäßen elektrisch leitfähigen Compounds, hergestellt mittels Tränken von CNT-Agglomeraten und anschließender Direktcompoundierung sind den Compounds aus den Vergleichsversuchen, hergestellt entweder mittels Direktcompoundierung oder auch via Masterbatch und Verdünnung, jedoch ohne Tränkung der CNT, überlegen. Der Dispersionsgrad der erfindungsgemäßen Compounds ist gegenüber den Vergleichsversuchen verbessert. Des Weiteren wird teilweise eine Verbesserung der mechanischen Kennwerte und/oder der elektrischen Leitfähigkeitswerte gefunden. In allen Fällen wurden bei den erfindungsgemäßen Compounds weniger Defekte auf der Oberfläche der Spritzgießlinge als bei den Compounds der Vergleichsversuche beobachtet.

## Patentansprüche

1. Verfahren zur Herstellung von Polymer-Kohlenstoffnanoröhren-Kompositen, umfassend die Schritte:
(A) Bereitstellen von Kohlenstoffnanoröhren-Agglomeraten mit einer durchschnittlichen Agglomeratgröße von ≥ 0,02 mm bis ≤ 6 mm;
(B) Kontaktieren der Kohlenstoffnanoröhren-Agglomerate mit einem Tränkungsmaterial, wobei das Kontaktieren derart durchgeführt wird, dass ≥ 50 Gewichts-%, bezogen auf das Gewicht der Kohlenstoffnanoröhren, der Kohlenstoffnanoröhren-Agglomerate nach dem Kontaktieren immer noch eine durchschnittliche Agglomeratgröße von ≥ 0,02 mm aufweisen; und
(C) Einarbeiten der in Schritt (B) erhaltenen, mit einem Tränkungsmaterial kontaktierten Kohlenstoffnanoröhren-Agglomerate in ein thermoplastisches Polymermaterial oder in ein Reaktivharzsystem.

2. Verfahren gemäß Anspruch 1, wobei die die Agglomerate bildenden Kohlenstoffnanoröhren mehrwandige Kohlenstoffnanoröhren mit einem durchschnittlichen äußeren Durchmesser von ≥ 3 nm bis ≤ 100 nm und einem Verhältnis von Länge zu Durchmesser von ≥ 5 sind.

3. Verfahren gemäß Anspruch 1, wobei das Tränkungsmaterial derart ausgewählt ist, dass es bei der in Schritt (B) herrschenden Temperatur eine Viskosität von ≥ 0,2 mPas bis ≤ 20000 mPas aufweist.

4. Verfahren gemäß Anspruch 1, wobei das Tränkungsmaterial derart ausgewählt ist, dass dessen Schmelzpunkt unterhalb der in Schritt (C) herrschenden Temperatur liegt.

5. Verfahren gemäß Anspruch 1, wobei das Tränkungsmaterial eine wässrige Lösung und/oder Dispersion eines Polymers umfasst.

6. Verfahren gemäß Anspruch 1, wobei das Tränkungsmaterial Substanzen umfasst, die ausgewählt sind aus der Gruppe umfassend Polyether, Ester, Ketone, Phosphate, Phosphonate, Sulfonate, Sulfonamine, Carbonate, Carbamate, Amine, Amide, Silikone, organische Verbindungen mit langkettigen Alkylgruppen, Wachse, Glyceride, Fette, Benzoate, Phthalate, Adipinsäurederivate, Bernsteinsäurederivate und/oder monofunktionelle Epoxide.

7. Verfahren gemäß Anspruch 1, wobei die in Schritt (B) erhaltenen, mit der Tränkungsflüssigkeit kontaktierten Kohlenstoffnanoröhren-Agglomerate bei Raumtemperatur rieselfähig sind.

8. Verfahren gemäß Anspruch 1, wobei in Schritt (B) das Gewichtsverhältnis von Kohlenstoffnanoröhren-Agglomeraten zu Tränkungsmaterial ≥ 1:4 bis ≤ 10:1 beträgt.

9. Verfahren gemäß Anspruch 1, wobei nach Schritt (B) der Gewichtsanteil von Kohlenstoffnanoröhren-Agglomeraten im getränkten Material ≥ 20 Gewichts-% an Kohlenstoffnanoröhrchen beträgt.

10. Verfahren gemäß Anspruch 1, wobei in Schritt (C) die in Schritt (B) erhaltenen, mit dem Tränkungsmaterial kontaktierten Kohlenstoffnanoröhren-Agglomerate in das thermoplastische Polymermaterial oder Reaktivharzsystem in einem Anteil von ≥ 0,01 Gewichts-% bis ≤ 50 Gewichts-% (bezogen auf Kohlenstoffnanoröhren) eingearbeitet werden.

11. Verfahren gemäß Anspruch 1, wobei die Schritte (B) und (C) unmittelbar aufeinander folgen.

12. Verfahren gemäß Anspruch 1, wobei das thermoplastische Polymermaterial Polyamide, Polycarbonat, Homo- und Copolymere des Polyoxymethylene, thermoplastische Polyurethane, Polyolefine, Polyethylentherephtalat, Polybutylentherephtalat, Polyacrylate, Styrolpolymere, Polyacrylnitril, Polystyrenacrylnitril, Polyacrylnitrilbutadienstyren, Polyvinylchlorid, fluorierte Polymere, Polyetherimid, Polyetheretherketon, Polyphenylensulfid, Polyphenylensulfon oder Polyphenylether oder Blends, Blockcopolymerformen oder Modifikationen der vorgenannten Polymere umfasst.

13. Verfahren gemäß Anspruch 1, wobei das Reaktivharzsystem Epoxide, Polyurethane, Phenolharze, ungesättigte Polyester und/oder Aminoplaste umfasst.

14. Mit einem Tränkungsmaterial kontaktierte Kohlenstoffnanoröhren-Agglomerate, wobei > 50 Gewichts-%, bezogen auf das Gewicht der Kohlenstoffnanoröhren, der Kohlenstoffnanoröhren-Agglomerate eine durchschnittliche Agglomeratgröße von ≥ 0,02 mm aufweisen, **dadurch gekennzeichnet, dass** das Tränkungsmaterial Substanzen umfasst, die ausgewählt sind aus der Gruppe umfassend Polyether, Ester, Ketone, Phosphate, Phosphonate, Sulfonate, Sulfonamine, Carbonate, Carbamate, Amine, Amide, Silikone, organische Verbindungen mit langkettigen Alkylgruppen, Wachse, Glyceride, Fette, Benzoate, Phthalate, Adipinsäurederivate, Bernsteinsäurederivate und/oder monofunktionelle Epoxide.

15. Kohlenstoffnanoröhren umfassendes Polymerkomposit, erhältlich durch ein Verfahren gemäß einem der Ansprüche 1 bis 13, **dadurch gekennzeichnet, dass** der Anteil an Kohlenstoffnanoröhren ≤ 50 Gewichts-% beträgt und der Anteil an in Agglomeraten mit einer durchschnittlichen Agglomeratgröße von ≥ 0,02 mm bis ≤ 6 mm vorliegenden Kohlenstoffnanoröhren an der Gesamtmenge von Kohlenstoffnanoröhren ≤ 10 Gewichts-% beträgt.
